# EUROPÄISCHE PATENTSCHRIFT

(11) **EP 4 171 870 B1**
(45) Veröffentlichungstag und Bekanntmachung des Hinweises auf die Patenterteilung: **10.09.2025**
(21) Anmeldenummer: 21742724.4
(22) Anmeldetag: 22.06.2021
(51) Int. Cl.: B23Q 11/08, E05F 15/00, F16P 3/02

(54) **MASCHINENTÜR UND MASCHINE**
MACHINE DOOR AND MACHINE
PORTE DE MACHINE ET MACHINE

(30) Priorität: 24.06.2020 DE 102020116649
(43) Veröffentlichungstag der Anmeldung: 03.05.2023
(73) Patentinhaber: Jäger-Engineering GmbH, 78126 Königsfeld (DE)
(72) Erfinder: KLOKER, Markus, 88499 Altheim (DE); JAEGER, Hubert, 78126 Koenigsfeld (DE)
(74) Vertreter: Westphal, Mussgnug & Partner Patentanwälte mbB
(86) Internationale Anmeldenummer: PCT/EP2021/067008
(87) Internationale Veröffentlichungsnummer: WO 2021/259934

(56) Entgegenhaltungen:
- CH-A- 526 081
- DE-A1- 10 055 044
- US-A1- 2018 092 507

## Beschreibung

Die vorliegende Erfindung betrifft eine Maschinentür mit den Merkmalen des Patentanspruchs 1 sowie eine Maschine mit den Merkmalen des Patentanspruchs 11.

Maschinentüren sind aus dem Stand der Technik in unterschiedlichen Ausgestaltungen vorbekannt. Maschinentüren dienen der Sicherung eines Zuganges einer Prozesskammer einer Maschine, beispielsweise einer Drehmaschine, einer Fräsmaschine, einer Schleifmaschine oder sonstige Maschinen zum Bearbeiten von Werkstücken, und sind Teil einer sicherheitsrelevanten Maschinenverkleidung. Maschinentüren können mit mechanischen und/oder elektrischen Sicherheitseinrichtungen versehen sein, wodurch sichergestellt werden soll, dass während des Prozesses in der Prozesskammer die Maschinentür ordnungsgemäß verschlossen ist und dass die Maschinentür verschlossen bleibt, bis der Prozess abgeschlossen ist oder unterbrochen wird.

Aus dem Stand der Technik sind eine Vielzahl von automatisch öffnenbaren Maschinentüren vorbekannt, welche entweder mittels einer Schienenführung oder mittels Scharnieren beweglich gehalten werden, um den Zugang zu der Prozesskammer freizugeben. Als Nachteil einer solchen Maschinentür hat sich gezeigt, dass die Führungen, Scharniere, Dichtungen, oder Türendschalter vorzeitig ausfallen.

Für die Automatisierung von Maschinen, insbesondere für die nachträgliche Automatisierung bestehender Maschinen, können Werkstücke mit einem Roboter oder einem Handlingsgerät in die Prozesskammer der Maschine eingebracht werden. Neben dem enormen Aufwand hat es sich gezeigt, dass insbesondere das Öffnen und das Schließen der Maschinentür zu Verzögerungen beim automatisierten Beladen der Werkstücke mit dem Roboter oder dem Handlingsgerät führt.

US 2018 092 507 A1 offenbart ein elektrisches Haushaltsgerät mit einer irisblendenartigen Tür.

CH 526 081 A offenbart ein Laborgerät mit irisblendenartiger Tür.

DE 100 55 044 A1 offenbart eine Werkzeugmaschine mit einer Absaugvorrichtung, deren Öffnung irisblendenartig ausgeführt ist.

Hier setzt die vorliegende Erfindung an.

Die vorliegende Erfindung widmet sich der Aufgabe, eine verbesserte Maschinentür vorzuschlagen, die die aus dem Stand der Technik bekannten Nachteile in zweckmäßiger Weise beseitigt und ein schnelles und automatisiertes Öffnen und Verschließen ermöglicht. Die Maschinentür soll vollautomatisch öffnenbar und schließbar sein, bei bestehenden Werkzeugmaschinen nachrüstbar sein und einen ausreichend großen Zugang zu der Prozesskammer freigeben können.

Diese Aufgaben werden durch eine Maschinentür mit den Merkmalen des Patentanspruchs 1 sowie eine Maschine mit den Merkmalen des Patentanspruchs 11 gelöst.

Weitere vorteilhafte Ausgestaltungen der vorliegenden Erfindung werden in den Unteransprüchen angegeben.

Die erfindungsgemäße Maschinentür mit den Merkmalen des Patentanspruchs 1 weist einen Türrahmen mit einer Öffnung, mindestens drei Türsegmente und mindestens ein Betätigungsmittel auf. Hier und im Nachfolgenden ist unter einem Türsegment ein vereinzelter Teilabschnitt einer Tür zu verstehen, der zusammen mit den mindestens zwei weiteren Türsegmenten konfiguriert ist, die Öffnung in dem Türrahmen, welche ebenfalls die Öffnung einer Maschine bildet, vollständig zu verschließen. Erfindungsgemäß ist dabei weiterhin vorgesehen, dass das Betätigungsmittel konfiguriert ist, die mindestens drei Türsegmente aus einer die Öffnung freigebenden Stellung in dem Türrahmen in eine die Öffnung verschließende Stellung aus dem Türrahmen zu verstellen. In der die Öffnung freigebenden Stellung der mindestens drei Türsegmente geben die mindestens drei Türsegmente die Öffnung in dem Türrahmen vollständig frei. Zum Verschließen der Öffnung in dem Türrahmen werden die mindestens drei Türsegmente durch das Betätigungsmittel in einer Ebene des Türrahmens aufeinander zu bewegt, wonach jedes der mindestens drei Türsegmente entlang eines Pfades bewegt wird, und die Pfade sich in der Mitte der Öffnung oder um die Mitte der Öffnung herum treffen. Die Ebene ist vorzugsweise parallel zu einer Frontseite des Türrahmens ausgebildet. In der die Öffnung freigebenden Stellung werden bevorzugt die mindestens drei Türsegmente vollständig in dem Türrahmen aufgenommen, und in der die Öffnung verschließenden Stellung werden die mindestens drei Türsegmente lamellenartig nach Art einer optischen Blende durch das Betätigungsmittel zugestellt.

Darüber hinaus hat es sich als vorteilhaft erwiesen, wenn das Befestigungsmittel die mindestens drei Türsegmente synchron in einer Tauchbewegung verstellen kann. Die Tauchbewegung kann näherungsweise als eine Bewegung entlang einer gebogenen Linie beschrieben werden, wobei die gebogenen Linien sich näherungsweise in dem Mittelpunkt der Öffnung des Türrahmens treffen. Eine solche Bewegung entspricht einer Bewegung entlang einer Spirale um den Mittelpunkt der Öffnung.

Gemäß einer bevorzugten Weiterbildung der vorliegenden Erfindung sind die mindestens drei Türsegmente in der die Öffnung freigebenden Stellung innerhalb einer Ausnehmung in dem Türrahmen angeordnet. Die Ausnehmung in dem Türrahmen ist dabei derart konfiguriert, dass weder menschliche Gliedmaße noch andere Fremdgegenstände in der Ausnehmung mit den Türsegmenten kollidieren können.

Die Öffnung in dem Türrahmen ist kreisförmig ausgebildet. Die Öffnung in dem Türrahmen ist in dieser bevorzugten Ausgestaltung um eine Achse ausgebildet, wobei das jeweilige Türsegmente in einer spiralförmigen Bewegung in Richtung der Achse beim Verschließen der Öffnung bewegt wird bzw. beim Öffnen vice versa. Darüber hinaus hat es sich als vorteilhaft erwiesen, wenn die mindestens drei Türsegmente in der die Öffnung verschließenden Stellung in einer Mitte der Öffnung, vorzugsweise in der Achse, überlappen.

Die mindestens drei Türsegmente sind umfangssymmetrisch um die Öffnung angeordnet. In einer bevorzugten Weiterbildung der vorliegenden Erfindung können mehr als drei Türsegmente, vorzugsweise sechs, neun, zwölf, fünfzehn Türsegmente oder mehr, vorgesehen sein. An dieser Stelle wird angemerkt, dass die Anzahl der Türsegmente mindestens drei betragen muss und im Übrigen beliebig gewählt werden kann.

Das jeweilige Türsegment ist dolchförmig ausgestaltet. Insbesondere ist es bevorzugt, wenn das jeweilige Türsegment einer gebogenen Form eines Dolches ähnelt, wobei die Spitze des Türsegments abgerundet ist und beispielsweise die Form eines Teilkreises oder Halbkreises aufweist. Darüber hinaus hat es sich als vorteilhaft erwiesen, wenn das Betätigungsmittel ein um die Öffnung drehbares Synchronmittel umfasst, durch welches die mindestens drei Türsegmente miteinander verbunden sind. Das um die Öffnung drehbare Synchronmittel kann beispielsweise ein Synchronring oder ein Teil eines Synchronringes sein, und kann durch geeignete Mittel mit dem jeweiligen Türsegment gekoppelt sein, um das jeweilige Türsegment aus der die Öffnung freigebenden Stellung innerhalb des Türrahmens in die die Öffnung verschließende Stellung zu bewegen.

Das Synchronmittel bzw. der Synchronring wird vorzugsweise durch mindestens ein Drehlager formschlüssig gehalten, wobei bevorzugt das mindestens eine Drehlager auf der von der Öffnung in dem Türrahmen abgewandten Seite angeordnet sein kann. Das Synchronmittel und das mindestens eine Drehlager können ineinandergreifen, wodurch einerseits ein Formschluss in einer Radialrichtung gegeben ist, aber auch ein Formschluss in den Axialrichtungen.

Das Drehlager kann vorzugsweise ein Gleitlager, ein Kugel- und/oder Rollenlager umfassen. Weiterhin können bevorzugt eine Mehrzahl von Drehlagern, insbesondere umfangssymmetrisch, um die Öffnung angeordnet sein, um das Synchronmittel bzw. den Synchronring abgestützt gelagert zu halten.

Das jeweilige Türsegment ist vorzugsweise mit dem Betätigungsmittel drehgelenkig verbunden, wobei das Drehgelenk beispielsweise durch eine Schulterschraube und einem zwischen der Schulterschraube und dem Türsegment und/oder dem Betätigungsmittel angeordneten Gleitmittel ausgewählt werden kann. Das Gleitmittel kann eine Kunststoffhülse, eine Metallhülse, ein Kugel- oder Rollenlager oder dergleichen sein.

Weiterhin hat es sich als vorteilhaft erwiesen, wenn das jeweilige Türsegment nach Art einer Koppel eines Koppelgetriebes mit dem Türrahmen verbunden ist. Unter einer Koppel oder einem Koppelglied wird ein mit dem Türrahmen nicht unmittelbares Getriebeglied eines Koppelgetriebes verstanden.

Die Koppel oder das Koppelglied und das zugehörige Türsegment folgt bzw. folgen keiner Bewegung um einen einzigen Pol bzw. Achse, sondern um Momentanpole. Das jeweilige Türsegment kann auch mit dem Koppelglied verbunden sein, wobei das Türsegment und das Koppelglied durch eine form-, kraft- und/oder stoffschlüssige Verbindung verbunden sein können.

Das Koppelglied kann gemäß einer bevorzugten Weiterbildung der vorliegenden Erfindung aus einem metallischen Werkstoff hergestellt sein, währenddessen das jeweilige Türsegment aus einem anderen, bevorzugt hochfesten, Werkstoff hergestellt sein kann. Beispielsweise können die mindestens drei Türsegmente aus einem Mehrkomponenten-Werkstoff oder einem Verbundwerkstoff hergestellt sein, beispielsweise aus einem Kohlefaserverbundwerkstoff. Durch die gezielte Auswahl der verwendeten Werkstoffe für die mindestens drei Türsegmente können die Türsegmente widerstandsfähig für mechanische Einwirkungen sein und beispielsweise schussfest ausgebildet sein, um besonders hohen Sicherheitsansprüchen gerecht zu werden.

Nach Maßgabe einer bevorzugten Weiterbildung der vorliegenden Erfindung ist das jeweilige Türsegment über ein Koppelgetriebeglied mit dem Türrahmen verbunden. Das Koppelgetriebeglied ist einenends drehgelenkig mit dem Türrahmen verbunden und anderenends mit dem jeweiligen Türsegment. Das Türsegment oder das Koppelglied mit dem Türsegment ist wiederum drehgelenkig zwischen dem Koppelgetriebeglied und dem Betätigungsmittel bzw. dem Synchronmittel bzw. dem Synchronring angeordnet, die drehgelenkige Verbindung zwischen dem Betätigungsmittel bzw. dem Synchronmittel bzw. dem Synchronring und die drehgelenkige Verbindung zu dem Koppelgetriebeglied sind beabstandet zueinander angeordnet.

Weiterhin hat es sich als vorteilhaft erwiesen, wenn das Betätigungsmittel einen Antrieb aufweist, wobei bevorzugt der mindestens eine Antrieb ein Linearantrieb ist. In einer bevorzugten Weiterbildung kann der mindestens eine Antrieb einen pneumatischen Zylinder umfassen, der sich durch eine hohe Dynamik auszeichnet. Alternativ kann der mindestens eine Antrieb ein Rotationsantrieb umfassen der insbesondere mittels eines Getriebes wirkt. Ein solcher Antrieb kann beispielsweise ein ein- oder mehrstufiges Zahngetriebe, ein Schneckengetriebe, ein Planetengetriebe und/oder einen hochpoligen, elektrischen Direktantrieb, auch Torque-Antrieb genannt, umfassen. Bevorzugt können mehrere Antriebe, insbesondere umfangssymmetrisch, um die Öffnung angeordnet sein. Der jeweilige Antrieb kann mit dem Synchronmittel bzw. Synchronring über einen Hebel verbunden sein, wobei der Hebel vorzugsweise L-förmig ausgebildet ist, um zumindest abschnittsweise ein Türsegment, bzw. die Koppel und/oder das Koppelgetriebeglied umgreift, wodurch eine besonders flache Bauweise realisiert werden kann.

Weiterhin kann es vorteilhaft sein, wenn eine Sensorik vorgesehen ist, durch die die Öffnung des Türrahmens in der freigegebenen oder verschlossenen Stellung erfasst werden kann. Beispielsweise kann es vorteilhaft sein, wenn die Position des Synchronmittels bzw. Synchronringes und/oder des mindestens einen Antriebs erfasst werden kann. Weiterhin kann ebenfalls eine Präsenzerkennung vorgesehen sein, durch die Gegenstände oder Personen in einem Gefahrenbereich benachbart zu dem Türrahmen erfasst werden können.

Die Maschinentür kann darüber hinaus eine Schnittstelle aufweisen, die es ermöglicht, mit der Maschine zu kommunizieren. Insbesondere können sicherheitsrelevante Daten ausgetauscht werden, wodurch sichergestellt ist, dass die Öffnung der Maschinentür nicht während eines Prozesses geöffnet werden kann oder dass beim Freigeben der Öffnung der Prozess in der Maschine unterbrochen wird. Auch können in der Schnittstelle entsprechende Verbindungen zum Übertragen von Medien vorgesehen sein, beispielsweise von Druckluft, Hydrauliköl oder elektrischer Energie, um den mindestens einen Antrieb mit Energie seitens der Maschine zu versorgen.

Ein weiterer Aspekt der vorliegenden Erfindung betrifft eine Maschine mit einem Prozessraum und mit einer zuvor beschriebenen Maschinentür.

Nachfolgend wird unter Bezugnahme auf die begleitende Zeichnung ein Ausführungsbeispiel der vorliegenden Erfindung im Detail beschrieben. Es zeigen:
- Figur 1: eine schematische und vereinfachte Draufsicht auf eine erfindungsgemäße Maschinentür mit einem Türrahmen und einer Öffnung im geöffneten Zustand,
- Figur 2: eine schematische und vereinfachte Draufsicht der Maschinentür gemäß Figur 1, wobei die Öffnung in dem Türrahmen durch eine Mehrzahl von Türsegmenten gemeinsam verschlossen ist,
- Figur 3: eine teilweise geschnittene und vereinfachte Darstellung der Maschinentür gemäß den Figuren 1 und 2, wobei Betätigungsmittel ersichtlich sind, durch welche die Türsegmente zwischen einer die Öffnung freigebenden Stellung und einer die Öffnung verschließenden Stellung beweglich sind,
- Figur 4: eine vergrößerte Darstellung der Betätigungsmittel gemäß des Details A in Figur 3,
- Figur 5: eine Schnittdarstellung gemäß der Schnittlinie B-B in Figur 4,
- Figur 6: eine Schnittdarstellung gemäß der Schnittlinie C-C in Figur 4, und
- Figur 7: eine vergrößerte Detaildarstellung eines Drehlagers gemäß des Details E in Figur 6.

Nachfolgend werden gleiche oder funktional gleiche Teile oder Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

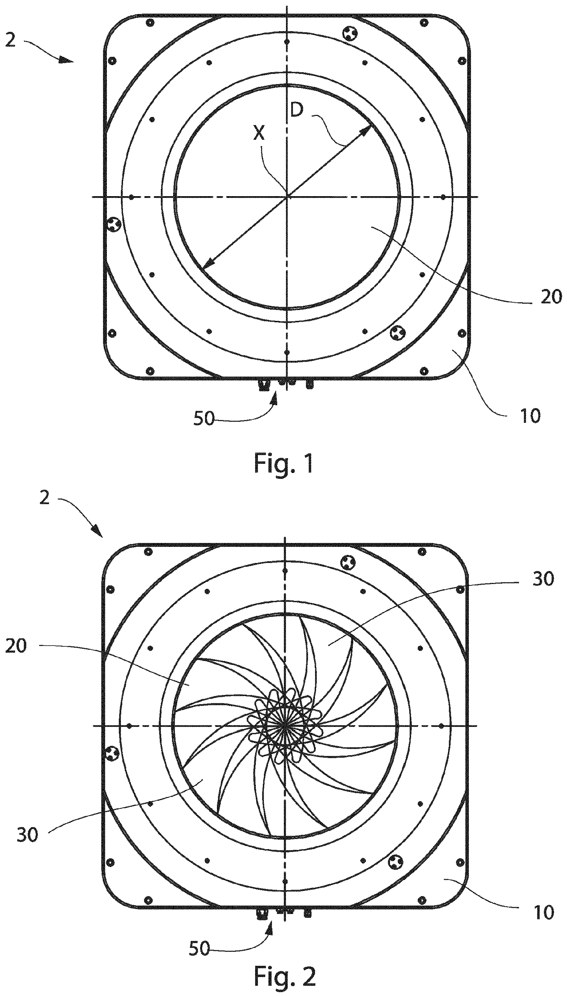

Figur 1 zeigt eine Draufsicht einer Maschinentür 2, welche in einer Wandung im Bereich eines Zuganges zu einer Prozesskammer einer (nicht dargestellten) Maschine 1 angeordnet werden kann.

Die Maschinentür 2 weist einen Türrahmen 10 auf, der sich um eine Öffnung 20 erstreckt. Die Maschinentür 2 kann unmittelbar mit der Wandung der Maschine 1 verbunden werden und den Zugang zu der Prozesskammer der Maschine 1 vollständig verschließen.

Der Türrahmen 10 weist eine Frontseite 11 und eine (verdeckt dargestellte) Rückseite 12 auf, wobei die Frontseite 11 auf der von der Prozesskammer abgewandten Seite der Maschinentür 2 angeordnet ist und die Rückseite 12 auf der der Prozesskammer zugewandten Seite der Maschinentür.

Die Öffnung 20 verbindet die Frontseite 11 mit der Rückseite 12 und kann wie in dem dargestellten und beschriebenen Ausführungsbeispiel kreisförmig um eine Achse X ausgebildet sein, wobei die Öffnung 20 einen Durchmesser D aufweist. Der Durchmesser D beträgt vorzugsweise 300mm < D < 1000mm.

Darüber hinaus weist die Maschinentür 2 eine Mehrzahl von Türsegmenten 30 auf, die durch ein Betätigungsmittel 40 aus einer die Öffnung 20 freigebenden Stellung in dem Türrahmen 10 gemäß Figur 1 in eine die Öffnung 20 verschließende Stellung aus dem Türrahmen 10 gemäß Figur 2 zugestellt werden können. In dem dargestellten Ausführungsbeispiel weist die Maschinentür 2 zwölf Türsegmente 30 auf, welche baugleich ausgebildet sind und um die Achse X umfangssymmetrisch angeordnet sind.

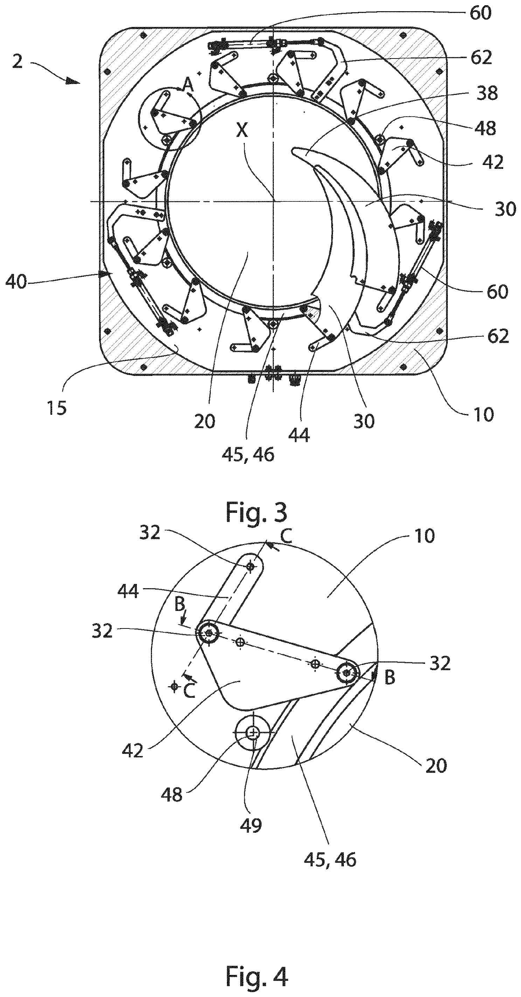

Die Türsegmente 30 werden durch das Betätigungsmittel 40 in der die Öffnung 20 freigebenden Stellung in eine in Figur 3 dargestellte Ausnehmung 15 in den Türrahmen 10 vollständig eingezogen. Zum Verschließen der Öffnung 20 werden die Türsegmente 30 aus der Ausnehmung 15 heraus in Richtung der Achse X in einer spiralförmigen Bewegung solange zugestellt, bis die Öffnung 20 vollständig verschlossen ist. In dieser Stellung steht ein freies Ende 38 jedes Türsegments 30 über die Achse X hinaus und die freien Enden 36 der Türsegmente 30 überlappen - wie aus Figur 2 ersichtlich ist - in der Mitte der Öffnung 20.

Das jeweilige Türsegment 30 kann die Form eines gebogenen Dolches aufweisen und an dem freien Ende 38 eine kreisförmige Verrundung aufweisen. Die Türsegmente 30 können weiterhin aus einem beliebigen Werkstoff hergestellt werden, beispielsweise aus einem metallischen Werkstoff oder aus einem Kunststoff, wobei bevorzugt Mehrkomponenten-Werkstoffe oder Verbundwerkstoffe, insbesondere Kohlefaserverbundwerkstoffe verwendet werden.

Unter Bezugnahme auf die Figuren 3 bis 7 kann entnommen werden, dass das Betätigungsmittel 40 ein Synchronmittel 45 und mindestens einen Antrieb 60 umfasst. Der Antrieb 60 ist mittels des Synchronmittels 45 mit den Türsegmenten 30 gekoppelt.

Das Synchronmittel 45 ist in dem dargestellten Ausführungsbeispiel als ein Synchronring 46 ausgebildet, der um die Öffnung 20 koaxial zu der Achse X in der Ausnehmung 15 des Türrahmens 10 sowohl axial als auch radial durch ein Drehlager 48 abgestützt gelagert gehalten wird. In dem beschriebenen Ausführungsbeispiel wird das Synchronmittel 45 durch mehrere über den Umfang verteilte Drehlager 48 abgestützt, welche ein Rollenlager oder ein Rollenkugellager umfassen können. Um das Synchronmittel 45 möglichst spielfrei zu lagern, können die Drehlager 48 mittels eines Exzenters 49 in der Ausnehmung 15 bzw. am Türrahmen 10 positioniert werden.

Das Drehlager 48 kann konfiguriert sein, den Synchronring 46 sowohl auf der der Frontseite 11 als auch der der Rückseite 12 zugewandten Seite zu umgreifen. Der Synchronring 46 weist auf der dem Drehlager 48 zugewandten Seite eine zu dem Drehlager 48 korrespondierende Formgebung auf.

Die zwangsgeführte Bewegung der Türsegmente 30 mittels des Betätigungsmittels 40 kann nach Art eines Koppelgetriebes erfolgen. Hierzu umfasst das Betätigungsmittel 40 neben dem Synchronmittel 45 und dem Antrieb 60 weiterhin für jedes der Türsegmente 30 eine Koppel bzw. ein Koppelglied 42 und ein Koppelgetriebeglied 44. Das Koppelgetriebeglied 44 ist als ein "Schwinge", bezogen auf die Achse X in einer Radialrichtung, an dem Türrahmen 10 mittels eines Drehgelenks 32 drehbar angeschlossen und verbindet das Koppelglied 42 mit dem Türrahmen 10. Das Koppelglied 42 ist einenends (radial innen) mit dem Synchronmittel 45 und anderenends (radial außen) über ein Koppelgetriebeglied 44 mit dem Türrahmen 10 verbunden. An dem Koppelglied 42 ist das jeweilige Türsegment 30 befestigt. An dieser Stelle sei anzumerken, dass das Türsegment 30 mit dem Koppelglied 42 integral ausgebildet sein kann oder mit einem Koppelglied 42 verbunden werden kann. Bevorzugt kann das Koppelglied 42 mittels einer stoffschlüssigen Verbindung und/oder einer Schraubverbindung mit dem Türsegment 30 verbunden werden.

Das jeweilige Koppelglied 42 ist über ein Drehgelenk 32 mit dem Synchronmittel 45 und dem Koppelgetriebeglied 44 gekoppelt. Weiterhin ist das jeweilige Koppelgetriebeglied 44 mit dem Türrahmen 10 über ein weiteres Drehgelenk 32 verbunden.

Die Türsegmente 30 sind derart ausgebildet und angeordnet, dass diese sowohl in der die Öffnung 20 freigebenden Stellung als auch in der die Öffnung 20 verschließenden Stellung mit benachbarten Türsegmenten 30 überlappen, siehe Figuren 2 und 3. In einer Umfangsrichtung um die Achse X können die Türsegmente 30 sowohl auf der der Frontseite 11 zugewandten Seite als auch auf der der Rückseite 12 zugewandten Seite mit dem benachbarten Türsegment 30 in Reibkontakt stehen.

In der die Öffnung 20 verschließenden Stellung ragen die freien Enden 38 der Türsegmente 30 über den Mittelpunkt der Öffnung 20 hinaus in eine gegenüberliegende Hälfte der Öffnung. Die Überlappung kann vorzugsweise bis zu 20 % des Radius der Öffnung 20 betragen. Demnach ist eine Sehnenlänge des jeweiligen Türsegmentes 30 größer als der Radius der Öffnung 20.

Wie aus Figur 3 ersichtlich ist, kann die Maschinentür 2 drei Antriebe 60 aufweisen, welche umfangssymmetrisch um die Öffnung 20 verteilt angeordnet sind. Der jeweilige Antrieb 60 kann einen Linearantrieb, insbesondere einen pneumatischen Stellzylinder, umfassen.

Der Antrieb 60 kann in der Ausnehmung 15 des Türrahmens 10 angeordnet sein und mittels eines L-förmigen Hebels 62 mit dem Synchronmittel 45 verbunden sein. Der L-förmige Hebel 62 erstreckt sich zwischen zwei benachbarten Koppelgetriebegliedern 44 und Koppelgliedern 42 und kann diese zumindest abschnittsweise umgreifen. Der Antrieb 60 ist auf der von der Öffnung 20 abgewandten Seite der Koppelglieder 42 und Koppelgetriebeglieder 44 angeordnet, wodurch eine besonders kompakte Bauform realisiert werden kann.

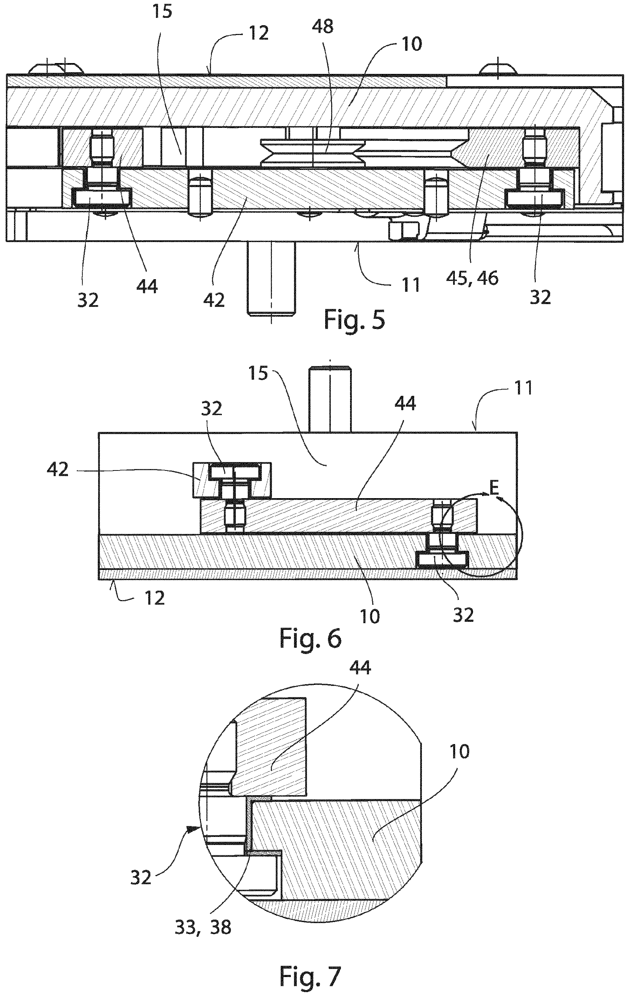

Wie unter Bezugnahme auf die Figuren 6 und 7 ersichtlich ist, können die Drehgelenke 32 eine Schulterschraube umfassen, welche mittels einer Hülse als ein Gleitmittel 33 mit dem jeweiligen Bauteil drehbeweglich gekoppelt sind.

Eine Zustellbewegung der Antriebe 60 führt zu einer synchronen Bewegung der Türsegmente 30. Das jeweilige Türsegment 30 kann in einer spiralförmigen Bewegung um die Achse X zugestellt werden, wobei zum Verschließen der Öffnung 20 die Türsegmente 30 in Richtung der Achse X in einer Ebene des Türrahmens 10 zueinander gerichtet zugestellt werden und zum Freigeben der Öffnung 20 in die Ausnehmung 15 vollständig eintauchen. Bei der Zustellbewegung durch das Betätigungsmittel 40 erfährt das jeweilige Türsegment 30 eine Drehbewegung um Momentanpole entlang der spiralförmigen Bewegung.

Die Maschinentür 2 kann eine (nicht dargestellte) Sensorik aufweisen, durch die eine Schließerkennung möglich ist. Die Sensorik kann sowohl die Position der Türsegmente 30 und/oder des Betätigungsmittels 40 erfassen. Weiterhin kann die Sensorik einen Näherungssensor oder eine Präsenzerkennung zur Überwachung des Gefahrenbereiches der Maschinentür 2 aufweisen.

Durch eine Schnittstelle 50 der Maschinentür 2 können sowohl elektrische Signale als auch elektrische Energie zwischen der Maschine 1 und der Maschinentür 2 ausgetauscht werden, aber ebenso Medien, wie beispielsweise Druckluft oder Hydrauliköl. Insbesondere ermöglicht die Schnittstelle eine Kommunikation zwischen einer Maschinensteuerung der Maschine 1 und der Maschinentür 2.

### Bezugszeichenliste

- 1: Maschine
- 2: Maschinentür
- 10: Türrahmen
- 11: Frontseite
- 12: Rückseite
- 15: Ausnehmung
- 20: Öffnung
- 30: Türsegment
- 32: Drehgelenk
- 33: Gleitmittel
- 34: Hülse
- 38: freies Ende von 30
- 40: Betätigungsmittel
- 42: Koppelglied
- 44: Koppelgetriebeglied
- 45: Synchronmittel
- 46: Synchronring
- 48: Drehlager
- 49: Exzenter
- 50: Schnittstelle
- 60: Antrieb
- 62: Hebel

- D: Durchmesser
- X: Achse

## Patentansprüche

1. Maschinentür (2), eingerichtet zur Sicherung eines Zugangs einer Prozesskammer einer Dreh-, Fräs- oder Schleifmaschine oder zur Nachrüstung bei bestehenden Werkzeugmaschinen, aufweisend
- einen Türrahmen (10) mit einer Öffnung (20),
- mindestens drei Türsegmente (30), und
- ein Betätigungsmittel (40),
- wobei das Betätigungsmittel (40) eingerichtet ist, die mindestens drei Türsegmente (30) aus einer die Öffnung (20) freigebenden Stellung in dem Türrahmen (10) in eine die Öffnung (20) verschließende Stellung aus dem Türrahmen (10) zu verstellen,
**dadurch gekennzeichnet, dass**
die Öffnung kreisförmig ist,
das jeweilige Türsegment dolchförmig ist,
die mindestens drei Türsegmente in der die Öffnung verschließenden Stellung lamellenartig nach Art einer optischen Blende durch das Betätigungsmittel zugestellt werden und
die mindestens drei Türsegmente umfangsymmetrisch um die Öffnung angeordnet sind.

2. Maschinentür (2) nach Anspruch 1,
**dadurch gekennzeichnet, dass**
das Betätigungsmittel (40) eingerichtet ist, die mindestens drei Türsegmente (30) synchron in einer Tauchbewegung zu verstellen.

3. Maschinentür (2) nach Anspruch 2,
**dadurch gekennzeichnet, dass**
die mindestens drei Türsegmente (30) synchron in der Tauchbewegung aus einer Ausnehmung (15) im Türrahmen (10) in die Öffnung (20) austauchen und aus der Öffnung eintauchen.

4. Maschinentür (2) nach einem der vorgenannten Ansprüche, **dadurch gekennzeichnet, dass** das Betätigungsmittel (40) ein um die Öffnung drehbares Synchronmittel (45) umfasst.

5. Maschinentür (2) nach Anspruch 4, **dadurch gekennzeichnet, dass** das Synchronmittel (45) durch mindestens ein Drehlager (48) formschlüssig gehalten ist.

6. Maschinentür (2) nach einem der vorgenannten Ansprüche, **dadurch gekennzeichnet, dass** das jeweilige Türsegment (30) mit dem Betätigungsmittel (40) drehgelenkig verbunden ist.

7. Maschinentür (2) nach einem der vorgenannten Ansprüche, **dadurch gekennzeichnet, dass** das jeweilige Türsegment (30) koppelartig mit dem Türrahmen (10) verbunden ist.

8. Maschinentür (2) nach einem der vorgenannten Ansprüche, **dadurch gekennzeichnet, dass** das jeweilige Türsegment (30) über ein Koppelgetriebeglied (44) mit dem Türrahmen (10) verbunden ist.

9. Maschinentür (2) nach einem der vorgenannten Ansprüche, **dadurch gekennzeichnet, dass** das Betätigungsmittel (40) einen Antrieb (60) aufweist, insbesondere einen Linearantrieb.

10. Maschinentür (2) nach einem der vorgenannten Ansprüche, **dadurch gekennzeichnet, dass** eine Sensorik vorgesehen ist, insbesondere eine Sensorik zur Erkennung der die Öffnung (20) freigebenden Stellung und/oder der die Öffnung (20) verschließenden Stellung der mindestens drei Türsegmente (30).

11. Maschine (1) mit einem Prozessraum und einer den Prozessraum verschließenden Maschinentür nach einem der Ansprüche 1 bis 10.

## Claims

1. Machine door (2) configured for securing an access of a process chamber of a turning, milling or grinding machine or for retrofitting in existing machine tools, comprising
- a door frame (10) comprising an opening (20),
- at least three door segments (30), and
- an actuation means (40),
- wherein the actuation means (40) is configured for adjusting the at least three door segments (30) out of a position in the door frame (10) and releasing the opening (20), into a position out of the door frame (20) and closing the opening,
**characterised in that** the opening is circular,
the respective door segment is dagger-shaped,
the at least three door segments are delivered by the actuation means into the position closing the opening, in a lamellar manner, in the form of an optical shutter, and the at least three door segments are arranged in a peripherally symmetrical manner around the opening.

2. Machine door (2) according to claim 1,
**characterised in that** the actuation means (40) is configured to adjust the at least three door segments (30) synchronously in a plunging movement.

3. Machine door (2) according to claim 2,
**characterised in that** the at least three door segments (30) emerge from a recess (15) in the doorframe (10) into the opening (20) and plunge out of the opening, synchronously in the plunging movement.

4. Machine door (2) according to any of the preceding claims, **characterised in that** the actuation means (40) comprises a synchronous means (45) that is rotatable about the opening.

5. Machine door (2) according to claim 2, **characterised in that** the synchronous means (45) is held in a form-fitting manner by at least one pivot bearing (48).

6. Machine door (2) according to any of the preceding claims, **characterised in that** the respective door segment (30) is connected to the actuation means (40) in the manner of a rotary joint.

7. Machine door (2) according to any of the preceding claims, **characterised in that** the respective door segment (30) is connected to the doorframe (10) in a coupling-like manner.

8. Machine door (2) according to any of the preceding claims, **characterised in that** the respective door segment (30) is connected to the doorframe (10) via a mechanical linkage member (44).

9. Machine door (2) according to any of the preceding claims, **characterised in that** the actuation means (40) comprises a drive (60), in particular a linear drive.

10. Machine door (2) according to any of the preceding claims, **characterised in that** a sensor means is provided, in particular a sensor means for identifying the position releasing the opening (20) and/or the position closing the opening (20), of the at least three door segments (30).

11. Machine (1) comprising a process space and a machine door according to any of claims 1 to 10 that closes the process space.

## Revendications

1. Porte (2) de machine, agencée pour sécuriser un accès à une chambre de processus d'un tour, d'une fraiseuse ou d'une meule ou pour rééquiper des machines-outils existantes comportant :
- un cadre (10) de porte ayant une ouverture (20),
- au moins trois segments (30) de porte, et
- un moyen (40) d'actionnement,
- dans lequel le moyen (40) d'actionnement est agencé pour faire passer les au moins trois segments (30) de porte d'une position dégageant l'ouverture (20) dans le cadre (10) de porte à une position fermant l'ouverture (20) du cadre (10) de porte,
**caractérisée en ce que**
l'ouverture est circulaire,
le segment de porte respectif est en forme de poignard, les au moins trois segments de porte sont, par le moyen d'actionnement, de type à lamelle à la manière d'un écran optique, mis dans la position fermant l'ouverture, et
les au moins trois segments de porte sont disposés à symétrie périphérique autour de l'ouverture.

2. Porte (2) de machine suivant la revendication 1,
**caractérisée en ce que**
le moyen (40) d'actionnement est agencé pour déplacer les au moins trois segments (30) de porte en synchronisme en un déplacement vertical.

3. Porte (2) de machine suivant la revendication 2,
**caractérisée en ce que**
les au moins trois segments (30) de porte sortent, en synchronisme dans le mouvement de déplacement vertical à partir d'un évidement (15) dans le cadre (10) de la porte dans l'ouverture (20) et pénètrent dans l'ouverture.

4. Porte (2) de machine suivant l'une des revendications précédentes,
**caractérisée en ce que**
le moyen (40) d'actionnement comprend un moyen (45) de synchronisation tournant autour de l'ouverture.

5. Porte (2) de machine suivant la revendication 4,
**caractérisée en ce que**
le moyen (45) de synchronisation est retenu à complémentarité de forme par au moins un coussinet (48) de pivotement.

6. Porte (2) de machine suivant l'une des revendications précédentes,
**caractérisée en ce que**
le segment (30) de porte respectif est articulé à rotation avec le moyen (40) d'actionnement.

7. Porte (2) de machine suivant l'une des revendications précédentes,
**caractérisée en ce que**
le segment (30) de porte respectif est assemblé de type à accouplement au cadre (10) de la porte.

8. Porte (2) de machine suivant l'une des revendications précédentes,
**caractérisée en ce que**
le segment (30) de porte respectif est assemblé au cadre (10) de la porte par un organe (44) de transmission d'accouplement.

9. Porte (2) de machine suivant l'une des revendications précédentes,
**caractérisée en ce que**
le moyen (40) d'actionnement a un entraînement (60), en particulier un entrainement linéaire.

10. Porte (2) de machine suivant l'une des revendications précédentes,
**caractérisée en ce qu'**
il est prévu un système de capteur, en particulier un système de capteur pour l'identification de la position, dégageant l'ouverture (20) et/ou la position fermant l'ouverture (20), des au moins trois segments (30) de porte.

11. Machine (1) comprenant un espace de processus et une porte de machine fermant l'espace de processus suivant l'une des revendications 1 à 10.
